# EUROPÄISCHE PATENTSCHRIFT

(11) **EP 3 885 715 B1**
(45) Veröffentlichungstag und Bekanntmachung des Hinweises auf die Patenterteilung: **10.08.2022**
(21) Anmeldenummer: 20165396.1
(22) Anmeldetag: 24.03.2020
(51) Int. Cl.: G01F 23/02, G01F 23/38, G01F 23/80, G05D 9/12, F16N 19/00

(54) **ÖLSPIEGELREGULATOR**
OIL LEVEL REGULATOR
RÉGULATEUR DE NIVEAU D'HUILE

(43) Veröffentlichungstag der Anmeldung: 29.09.2021
(73) Patentinhaber: Emerson Climate Technologies GmbH, 13507 Berlin (DE)
(72) Erfinder: Fuhrmann, Christian, 41569 Rommerskirchen (DE); Quinn, Matthew, 52064 Aachen (DE); Nepovim, Radovan, 53701 Chrudim (CZ)
(74) Vertreter: Manitz Finsterwald Patent- und Rechtsanwaltspartnerschaft mbB

(56) Entgegenhaltungen:
- WO-A1-2017/098346
- US-A- 3 817 353
- US-A- 5 911 289
- US-A- 6 125 642

## Beschreibung

Die Erfindung betrifft einen Ölspiegelregulator mit einem Grundkörper, einer in dem Grundkörper ausgebildeten, durch ein Schauglas begrenzten und zur Aufnahme von Öl vorgesehenen Kammer, in welcher ein Schwimmer angeordnet ist, einem Hallsensor zur Erfassung der Lage des Schwimmers innerhalb der Kammer, einem in dem Grundkörper ausgebildeten Öleinlasskanal, einem in dem Grundkörper ausgebildeten und mit der Kammer kommunizierenden Ölauslasskanal, und einem an dem Grundkörper angebrachten und zwischen den Öleinlasskanal und den Ölauslasskanal geschalteten Magnetventil zum Steuern eines Ölflusses von dem Öleinlasskanal zu dem Ölauslasskanal.

Ein derartiger Ölspiegelregulator ist grundsätzlich bekannt und beispielsweise zur Überwachung und Regelung des Ölstands in einem Verdichter einer Kältemaschine oder Wärmepumpe, vorgesehen. Dabei kommuniziert die Kammer des Ölspiegelregulators derart mit einem Ölsumpf des Verdichters, dass die Lage des in der Kammer befindlichen Schwimmers mit dem Ölstand im Verdichter korrespondiert und der Ölstand entsprechend durch den Hallsensor anhand der Lage des Schwimmers innerhalb der Kammer erfasst werden kann. Detektiert der Hallsensor ein Absinken des Ölstands unterhalb eines vorgegebenen Schwellenwerts, so kann eine Elektronik des Ölspiegelregulators durch entsprechende Ansteuerung des Magnetventils für eine erforderliche Zufuhr von Öl in den Verdichter sorgen. Der Grundkörper des bekannten Ölspiegelregulators weist eine vergleichsweise komplexe Bauform auf, und zwar nicht nur hinsichtlich seiner äußeren Kontur, sondern auch hinsichtlich der darin verlaufenden Ölkanäle, die, sofern es sich hierbei um Bohrungen handelt, teilweise nach ihrer Herstellung nach außen hin abgedichtet werden müssen. Darüber hinaus ist auch die Elektronik des Ölspiegelregulators in dem Grundkörper untergebracht.

Einen Ölspiegelregulator gemäß dem Oberbegriff des Anspruchs 1 offenbart das Dokument WO 2017/098346 A1. Dieser Ölspiegelregulator weist einen Grundkörper auf, der mit mehreren sich in unterschiedliche Richtungen erstreckenden Asymmetrien versehen ist, beispielsweise mit einem Flansch zur mechanischen Anbindung an einen Kompressor. Aus US 5,911,289 A ist ein weiterer Ölspiegelregulator bekannt, welcher ein Gehäuse aufweist, das mit Asymmetrien versehen ist.

Der Erfindung liegt die Aufgabe zugrunde, einen Ölspiegelregulator der eingangs genannten Art zu schaffen, welcher einfacher und kostengünstiger herstellbar ist und sich somit durch eine höhere Wirtschaftlichkeit auszeichnet.

Die Aufgabe wird durch einen Ölspiegelregulator mit den Merkmalen des Anspruchs 1 und insbesondere dadurch gelöst, dass dem Grundkörper eine bezüglich einer Symmetrieachse rotationssymmetrische Grundform zugrunde liegt.

Aufgrund seiner rotationssymmetrischen Grundform ist es erfindungsgemäß möglich, den Grundkörper auf einer Drehmaschine anstatt, wie bei bekannten Ölspiegelregulatoren üblich, in einem mehrachsigen Fräszentrum herzustellen. Da sich Drehverfahren grundsätzlich schneller durchführen lassen als entsprechende Fräsprozesse, während des Drehvorgangs geringere Materialverluste auftreten und sich Drehmaschinen üblicherweise mit geringeren Kosten als Fräszentren betreiben lassen, kann der Grundkörper des erfindungsgemäßen Ölspiegelregulators mit einem geringeren wirtschaftlichen Aufwand hergestellt werden, wodurch sich letztlich auch der Ölspiegelregulator insgesamt durch eine höhere Wirtschaftlichkeit auszeichnet.

Darüber hinaus ermöglicht die rotationssymmetrische Grundform des Grundkörpers eine Minimierung der Länge von innerhalb des Grundkörpers verlaufenden Ölkanälen, was aufgrund von reduzierten Strömungsverlusten und -störungen den Ölfluss durch den Ölspiegelregulator hindurch verbessert und somit letztlich zu einer erhöhten Wirtschaftlichkeit beiträgt.

Vorteilhafte Ausbildungen der Erfindung sind den Unteransprüchen, der Beschreibung und der Zeichnung zu entnehmen.

Gemäß einer Ausführungsform liegt dem Grundkörper eine kreiszylindrische Grundform zugrunde. Der Grundkörper geht mit anderen Worten von einem kreisförmigen Querschnitt aus, wodurch er sich mittels eines Drehverfahrens besonders einfach fertigen lässt.

Dabei kann der Grundkörper entlang der Symmetrieachse gesehen Abschnitte unterschiedlichen Außendurchmessers aufweisen. Hierdurch ist es beispielsweise möglich, den Grundkörper mit einem einstückig ausgebildeten Adapter oder Flansch zur Befestigung des Ölspiegelregulators an einem Verdichter zu versehen.

Zu einer besonders einfachen Bauform, die auch eine besonders einfache Anbindung des Ölspiegelregulators an einem Verdichter ermöglicht, trägt außerdem bei, wenn sich der Ölauslasskanal parallel zur Symmetrieachse des Grundkörpers und insbesondere koaxial zu dieser erstreckt.

Ein besonders optimaler Verlauf der Ölkanäle innerhalb des Grundkörpers lässt sich erreichen, wenn das Magnetventil radial zur Symmetrieachse des Grundkörpers ausgerichtet ist. Im Falle einer kreiszylindrischen Ausbildung des Grundkörpers kann das Magnetventil hierfür an einer Mantelfläche des Grundkörpers angeordnet sein. Beispielsweise kann das Magnetventil in einer Sackbohrung sitzen, die radial in den Grundkörper eingebracht ist.

Gemäß einer weiteren Ausführungsform sind der Öleinlasskanal und das Magnetventil durch einen sich innerhalb des Grundkörpers erstreckenden geraden ersten Kanalabschnitt miteinander verbunden. Dabei kann es sich bei dem Öleinlasskanal um eine Sackbohrung handeln, die in einer zur Symmetrieachse rechtwinkligen Ebene liegt, und die sich kreissehnenartig in den Grundkörper hinein erstreckt. Der erste Kanalabschnitt kann durch eine Bohrung gebildet sein, die von einer Aufnahme für das Magnetventil ausgehend hin zu dem Öleinlasskanal gesetzt ist.

Gemäß einer weiteren Ausführungsform sind das Magnetventil und der Ölauslasskanal durch einen geraden zweiten Kanalabschnitt miteinander verbunden, welcher sich radial zur Symmetrieachse des Grundkörpers in diesem erstreckt. Insbesondere kann es sich bei dem zweiten Kanalabschnitt um eine Bohrung handeln, die in einer Aufnahme für das Magnetventil beginnt und im Ölauslasskanal endet.

Der erste und der zweite Kanalabschnitt können eine Ebene aufspannen, die zumindest annähernd rechtwinklig zur Symmetrieachse des Grundkörpers ausgerichtet ist. Grundsätzlich ist es möglich, dass der erste und zweite Kanalabschnitt exakt in einer zur Symmetrieachse rechtwinkligen Ebene liegen, insbesondere wenn auch das Magnetventil und der Öleinlasskanal in dieser Ebene liegen. Aus Platzgründen kann es jedoch vorteilhaft sein, den Öleinlasskanal in Richtung der Symmetrieachse gesehen versetzt zu dem Magnetventil anzuordnen, insbesondere um eine Kollision des Öleinlasskanals mit der Kammer zu verhindern. Je nach Größe dieses Versatzes verläuft der erste Kanalabschnitt dann leicht schräg zu der zur Symmetrieachse rechtwinkligen Ebene, in welcher der zweite Kanalabschnitt liegt.

Gemäß einer weiteren Ausführungsform bildet der Grundkörper eine Tasche für den Hallsensor aus. Die Tasche stellt auf einfache Weise eine korrekte Positionierung des Hallsensors sicher, d.h. dieser muss nicht nach seiner Montage noch auf den Schwimmer abgestimmt werden. Hierdurch ist die Montage des Ölspiegelregulators deutlich vereinfacht, was zur wirtschaftlicheren Herstellung des Ölspiegelregulators beiträgt.

Gemäß noch einer weiteren Ausführungsform ist ein Elektronikmodul an dem Grundkörper angebracht. Bei dem Elektronikmodul handelt es sich um eine separate Einheit, die anders als bei herkömmlichen Ölspiegelregulatoren nicht in den Grundkörper integriert ist, sondern von außen an diesem befestigt ist. Das Elektronikmodul kann beispielsweise ein vergossenes Elektronikmodul sein, d.h. von einem Harz umschlossene Elektronikbauteile aufweisen. Alternativ kann das Elektronikmodul ein Gehäuse aufweisen, in welchem die Elektronikbauteile untergebracht sind.

Vorzugsweise ist das Elektronikmodul im Bereich einer Tasche für den Hallsensor angeordnet. Da der Hallsensor typischerweise Teil des Elektronikmoduls ist, kann somit bei der Montage des Elektronikmoduls an dem Grundkörper gleichzeitig auch die bereits erwähnte korrekte Positionierung des Hallsensors sichergestellt werden.

Zu einer besonders einfachen Anbringung des Elektronikmoduls an dem Grundkörper trägt bei, wenn der Grundkörper an seiner Außenseite eine sich parallel zur Symmetrieachse erstreckenden ebene Fläche ausbildet, an welcher die Tasche für den Hallsensor und/oder das Elektronikmodul angeordnet sind/ist.

Um die Montage des Ölspiegelregulators an einem Verdichter zu vereinfachen und somit wirtschaftlicher zu gestalten, ist vorteilhafterweise eine Wasserwaage, insbesondere mit Rundlibelle, an dem Grundkörper angebracht, insbesondere an einer Oberseite des Grundkörpers. An dieser Stelle sei bemerkt, dass sich die Bezeichnungen "Oberseite" und "Unterseite" bzw. "oben" und "unten" in diesem Kontext stets auf die Einbaulage des Ölspiegelregulators beziehen, d.h. auf die Lage des Ölspiegelregulators, wenn dieser beispielsweise an einem Verdichter montiert ist.

Die Wasserwaage kann in den Grundkörper eingelassen sein und insbesondere im Wesentlichen bündig mit einer Außenseite des Grundkörpers abschließen. Alternativ kann die Wasserwaage auf der Außenseite des Grundkörpers sitzen.

Gemäß einer Ausführungsform ist die Wasserwaage lösbar mit dem Grundkörper verbunden. Dies ermöglicht es, die Wasserwaage nach der Anbringung des Ölspiegelregulators an einem Verdichter von dem Grundkörper zu lösen und bei der Montage eines anderen Ölspiegelregulators zu verwenden. Somit kann es sich bei der Wasserwaage um ein mehrfach verwendbares Bauteil handeln, welches unter Umständen auch als optionales Zubehörteil angeboten werden kann.

Alternativ kann die Wasserwaage stoffschlüssig mit dem Grundkörper verbunden sein, beispielsweise durch Kleben, Löten oder Schweißen. Denkbar ist ferner eine form- und/oder kraftschlüssige Verbindung der Wasserwaage mit dem Grundkörper, beispielsweise durch Einschrauben oder Einpressen.

Wie bereits erwähnt kann der Grundkörper einen Flansch und/oder Adapter zur Anbringung des Ölspiegelregulators an einem Verdichter ausbilden. Der Flansch und/oder Adapter wäre diesem Fall also einstückig in den Grundkörper integriert. Alternativ ist es denkbar, dass es sich bei dem Flansch und/oder Adapter um ein separates Bauteil handelt, welches an dem Grundkörper angebracht ist, zum Beispiel angeschraubt ist.

Unabhängig von der Ausbildung des Flanschs bzw. Adapters erstreckt sich der Ölauslasskanal bevorzugt komplett durch den Flansch bzw. Adapter hindurch.

Gemäß einer weiteren Ausführungsform bildet der Grundkörper einen Anbindungskanal zum Anbinden der Kammer an einen Ölsumpf eines Verdichters aus. Über den Anbindungskanal kann sich in der Kammer ein den Ölstand des Verdichters entsprechender Ölstand einstellen. Gemäß einer besonders einfachen Bauform kann der Anbindungskanal sich entlang der Symmetrieachse erstrecken und/oder den Ölauslasskanal ringförmig umgeben.

Vorteilhafterweise kommuniziert der Anbindungskanal über eine untere Öffnung und eine obere Öffnung mit der Kammer. An dieser Stelle sei nochmals darauf hingewiesen, dass sich die Bezeichnungen "oben" und "unten" auf den Einbauzustand des Ölspiegelregulators beziehen. Somit sorgt in erster Linie die untere Öffnung für einen Ölaustausch zwischen dem Anbindungskanal und der Kammer, wohingegen die obere Öffnung vor allem einer Entgasung der Kammer dient. In diesem Zusammenhang hat sich herausgestellt, dass sich eine optimale Entgasung der Kammer erreichen und Schaumbildung in der Kammer wirksam verhindern lässt, wenn die obere Öffnung eine größere Querschnittsfläche aufweist als die untere Öffnung.

Nachfolgend wird die Erfindung rein beispielhaft anhand möglicher Ausführungsformen anhand der beigefügten Zeichnung beschrieben.
- Fig. 1: ist eine perspektivische Ansicht einer ersten Ausführungsform eines erfindungsgemäßen Ölspiegelregulators.
- Fig. 2: ist eine Ansicht des Ölspiegelregulators von Fig. 1 von unten.
- Fig. 3: ist eine Vorderansicht des Ölspiegelregulators von Fig. 1 mit entferntem Schauglas und geschnittener Ringscheibe zur besseren Darstellung des Inneren einer Kammer des Ölspiegelregulators.
- Fig. 4A: ist eine Vorderansicht des Ölspiegelregulators von Fig. 1.
- Fig. 4B: ist die Schnittansicht B-B von Fig. 4A.
- Fig. 4C: ist die Schnittansicht C-C von Fig. 4A.
- Fig. 4D: ist eine perspektivische Ansicht des Schnitts B-B von Fig. 4A.
- Fig. 5: ist eine Teilschnittansicht des Ölspiegelregulators von Fig. 1.
- Fig. 6A: ist eine perspektivische Ansicht einer zweiten Ausführungsform eines erfindungsgemäßen Ölspiegelregulators.
- Fig. 6B: ist eine Seitenansicht des Ölspiegelregulators von Fig. 6A.
- Fig. 7: ist eine perspektivische Ansicht eines Grundkörpers des Ölspiegelregulators von Fig. 6A.
- Fig. 8: ist eine Vorderansicht einer dritten Ausführungsform eines erfindungsgemäßen Ölspiegelregulators mit entferntem Schauglas und geschnittener Ringscheibe zur besseren Darstellung des Inneren einer Kammer des Ölspiegelregulators.
- Fig. 9: ist eine perspektivische Ansicht einer vierten Ausführungsform eines erfindungsgemäßen Ölspiegelregulators.
- Fig. 10A: ist eine Vorderansicht einer fünften Ausführungsform eines erfindungsgemäßen Ölspiegelregulators.
- Fig. 10B: ist die Schnittansicht B-B von Fig. 10A.
- Fig. 11: ist eine perspektivische Ansicht einer sechsten Ausführungsform eines erfindungsgemäßen Ölspiegelregulators.

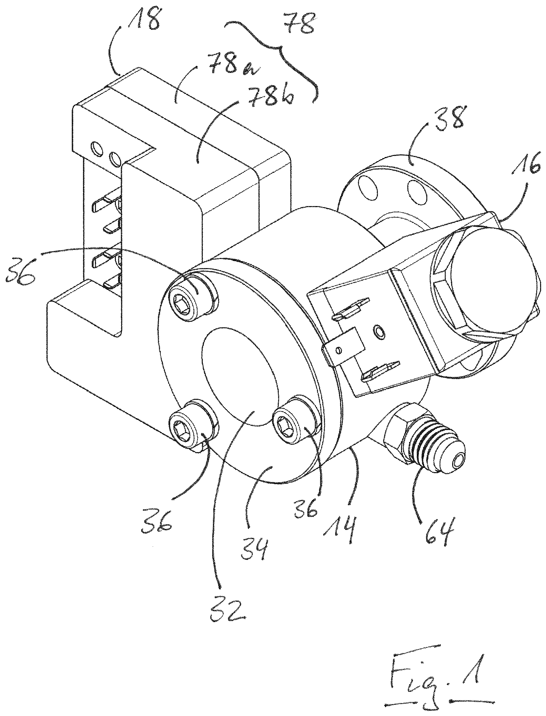

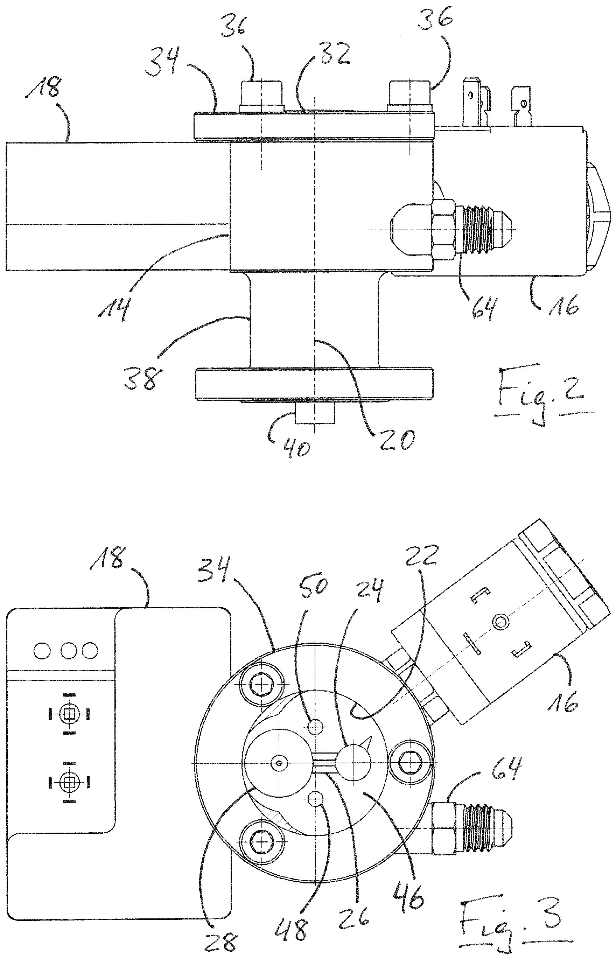

Die Figuren 1 bis 5 zeigen eine erste Ausführungsform eines Ölspiegelregulators mit einem Grundkörper 14 und daran angebrachtem Magnetventil 16 und Elektronikmodul 18.

Der Grundkörper 14 ist einstückig aus einem Metallmaterial gefertigt, und zwar mittels eines Drehverfahrens, sodass der Grundkörper 14, eine rotationssymmetrische, genauer gesagt kreiszylindrische, Grundform aufweist. Der Grundkörper 14 definiert entsprechend eine Symmetrieachse 20, welche mit der Längsmittelachse der kreiszylindrischen Grundform zusammenfällt. Die Symmetrieachse 20 definiert eine axiale Richtung, wohingegen rechtwinklig hierzu orientierte Richtungen als radial bezeichnet werden.

Der Grundkörper 14 bildet in seinem Inneren eine Kammer 22 aus, die zur Aufnahme von Öl dient. Zur Ermittlung des Ölstands in der Kammer 22 ist ein Schwimmer 24 in der Kammer 22 angeordnet. Der Schwimmer 24 ist durch einen Auftriebskörper gebildet, welcher an dem einen Ende eines Arms 26 sitzt, dessen anderes Ende an einem Drehkörper 28 angebracht ist, welcher um eine zu Symmetrieachse 20 parallel versetzte Drehachse 30 in der Kammer 22 drehbar gelagert ist. Um die Lage des Schwimmers 24 und somit den Ölstand in der Kammer 22 optisch auslesen zu können, ist eine vordere Stirnseite des Grundkörpers 14 durch ein Schauglas 32 verschlossen, welches in einer Ringscheibe 34 sitzt, die mittels dreier Schrauben 36 an den Grundkörper 14 angeschraubt ist.

An seiner dem Schauglas 32 abgewandten Rückseite bildet der Grundkörper 14 einen Flanschabschnitt 38 aus, welcher eine Befestigung des Ölspiegelregulators beispielsweise an einem Verdichter einer Kältemaschine oder Wärmepumpe ermöglicht. Der Flanschabschnitt 38 ist hohlzylindrisch ausgebildet und umgibt einen sich koaxial mit der Symmetrieachse 20 erstreckenden Rohrabschnitt 40, der in seinem Inneren einen Ölauslasskanal 42 definiert, welcher dazu dient, dem Verdichter Öl zuzuführen.

Der Rohrabschnitt 40 ist von einem Ringspalt 44 umgeben, der an einen Ölsumpf des Verdichters anschließbar ist. Der Ölauslasskanal 42 und der Ringspalt 44 sind durch eine Wand 46 des Grundkörpers 14 von der Kammer 22 getrennt. Allerdings sind in der Wand 46 eine untere Öffnung 48 und eine obere Öffnung 50 ausgebildet, im dargestellten Ausführungsbeispiel in Form von gleichgroßen kreisrunden Bohrungen. Wie erwähnt beziehen sich die Bezeichnungen "oben" und "unten" in diesem Kontext auf den Einbauzustand des Ölspiegelregulators. Über die Bohrungen 48, 50 kommuniziert die Kammer 22 mit dem Ringspalt 44. Dabei dient insbesondere die untere Öffnung 48 für einen Ölaustausch zwischen der Kammer 22 und dem Ringspalt 44, während die obere Öffnung 50 üblicherweise für eine Entgasung der Kammer 22 sorgt.

Das Elektronikmodul 18 ist an einer Außenseite des Grundkörpers 14 angebracht. Der Grundkörper 14 ist hierfür mit einer Flachfräsung versehen, welche eine ebene Fläche 52 definiert, die sich parallel zur Symmetrieachse 20 erstreckt und im eingebauten Zustand des Ölspiegelregulators im Wesentlichen vertikal orientiert ist. In der ebenen Fläche 52 sind geeignete Befestigungspunkte 54 zur Befestigung des Elektronikmoduls 18 vorgesehen. Auf der Höhe der Drehachse 30 des Drehkörpers 28 ist außerdem eine Tasche 56 für einen Hallsensor 58 des Elektronikmoduls18 ausgebildet. Bei der Montage des Elektronikmoduls 18 an dem Grundkörper 14 braucht der Hallsensor 58 des Elektronikmoduls18 also lediglich in die Tasche 56 des Grundkörpers 14 eingesetzt zu werden, um sicherzustellen, dass der Hallsensor 58 bezogen auf den Drehkörper 28 korrekt positioniert ist. Mithilfe des Hallsensors 58 kann sodann die Rotationslage des Drehkörpers 28 und somit die Lage des Schwimmers 24 in der Kammer 22, d.h. also letztlich der Ölstand der Kammer 22 und somit im Verdichter elektrisch erfasst werden.

Detektiert das Elektronikmodul 18, dass der Ölstand in der Kammer 22 und somit im Ölsumpf des Verdichters unter einen vorbestimmten Schwellenwert sinkt, so kann das Elektronikmodul 18 das Magnetventil 16 ansteuern, um dem Verdichter Öl zuzuführen.

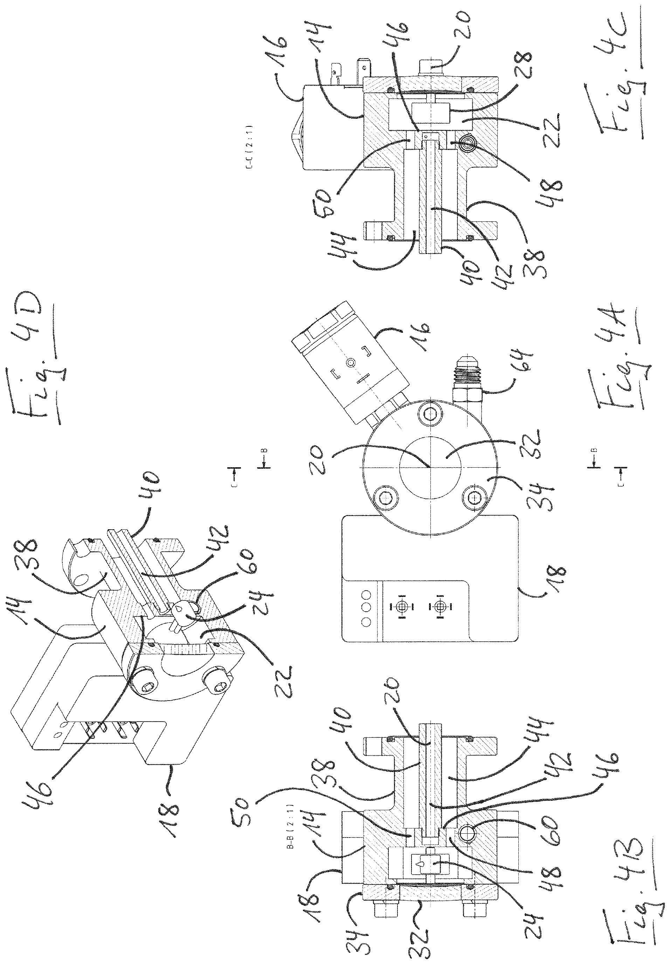

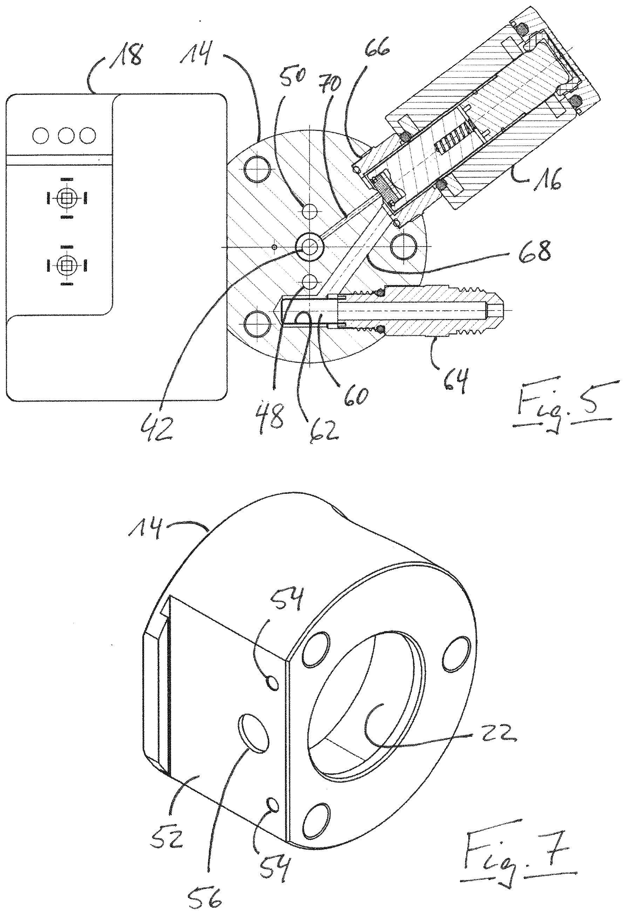

Zu diesem Zweck ist ein Öleinlasskanal 60 in dem Grundkörper 14 ausgebildet, welcher durch eine von der dem Elektronikmodul 18 gegenüberliegenden Seite her kreissehnenartig in den Grundkörper 14 gesetzte Bohrung 62 und einen darin eingeschraubten Anschlussstutzen 64 definiert ist. Wie Fig. 4 und 5 zu entnehmen ist, verläuft der Öleinlasskanal 60 hinter der Kammer 22 und unterhalb der Symmetrieachse 20.

Das Magnetventil 16 sitzt in einer dem Elektronikmodul 18 gegenüberliegend und oberhalb des Öleinlasskanals 60 angeordneten, radial in den Grundkörper 14 eingebrachten Ventilaufnahme 66, sodass das Magnetventil 16 insgesamt radial zur Symmetrieachse 20 ausgerichtet ist. Im dargestellten Ausführungsbeispiel sind die Ventilaufnahme 66 und das Magnetventil 16 unter einem Winkel von etwa 45° zu dem Öleinlasskanal 60 orientiert.

Ausgehend von der Ventilaufnahme 66 ist eine kreissehnenartig verlaufende Bohrung gesetzt, welche einen den Öleinlasskanal 60 mit dem Magnetventil 16 verbindenden ersten Kanalabschnitt 68 bildet. Dazu beabstandet ist ausgehend von der Ventilaufnahme 66 eine radial verlaufende zweite Bohrung gesetzt, welche einen zweiten Kanalabschnitt 70 bildet, der das Magnetventil 16 mit dem Ölauslasskanal 42 verbindet.

Wird das Magnetventil 16 durch das Elektronikmodul 18 geöffnet, so kann Öl durch den Öleinlasskanal 60, den ersten Kanalabschnitt 68, das Magnetventil 16, den zweiten Kanalabschnitt 70 und schließlich den Ölauslasskanal 42 in den Verdichter strömen.

Grundsätzlich ist es denkbar, dass der erste Kanalabschnitt 68 und der zweite Kanalabschnitt 70 in einer zur Symmetrieachse 20 rechtwinkligen Ebene liegen. Im vorliegenden Ausführungsbeispiel sind das Magnetventil 16 und der Öleinlasskanal 60 in axialer Richtung gesehen jedoch leicht versetzt zueinander angeordnet. Konkret liegt der Öleinlasskanal 60 zur Vermeidung einer Kollision mit der Kammer 22 in axialer Richtung gesehen etwas hinter dem Magnetventil 16. Insofern liegt bei der dargestellten Ausführungsform lediglich der zweite Kanalabschnitt 70 in einer zur Symmetrieachse 20 rechtwinkligen Ebene, während der erste Kanalabschnitt 68 zu dieser Ebene geringfügig geneigt ist.

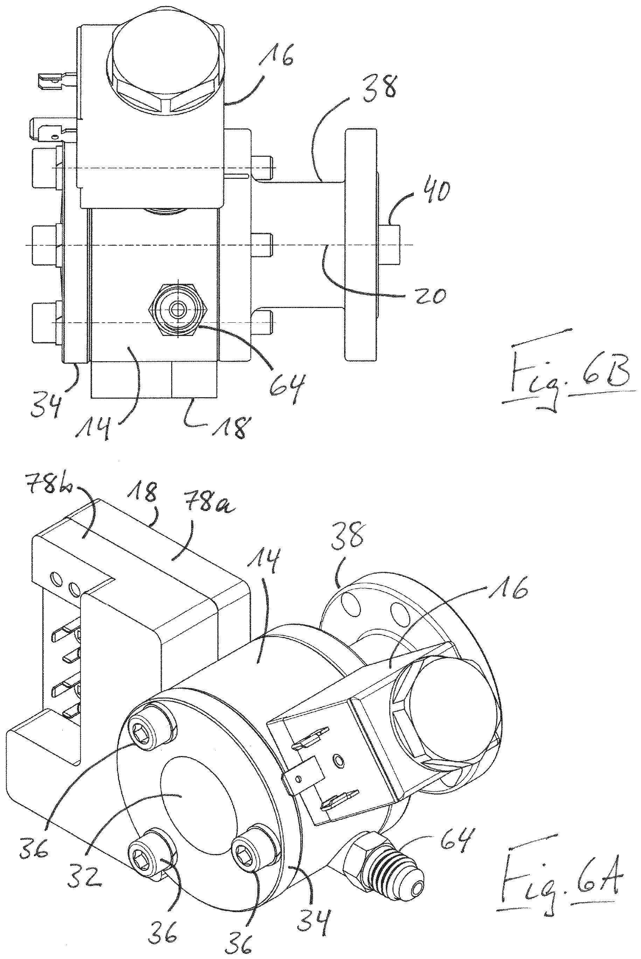

Wie bereits erwähnt bildet der Flanschabschnitt 38 bei der voranstehend beschriebenen ersten Ausführungsform einen integralen Bestandteil des Grundkörpers 14. Alternativ ist es aber auch möglich, den Flanschabschnitt 38 als ein von dem Grundkörper 14 separates Bauteil herzustellen und anschließend an dem Grundkörper 14 anzubringen, insbesondere anzuschrauben. Eine entsprechend ausgebildete zweite Ausführungsform, die sich ansonsten weiter nicht von der voranstehend beschriebenen ersten Ausführungsform unterscheidet, ist in Fig. 6A und 6B gezeigt. Der dazugehörige Grundkörper 14 ist in Fig. 7 dargestellt. Besonders gut erkennbar ist hierin die kreiszylindrische Grundform des Grundkörpers 14 sowie die durch Flachfräsen der Mantelfläche erzeugte ebene Fläche 52 für die Anbringung des Elektronikmoduls 18 mit den zur Fixierung des Elektronikmoduls 18 vorgesehenen Befestigungspunkten 54 sowie der Tasche 56 für den Hallsensor 58.

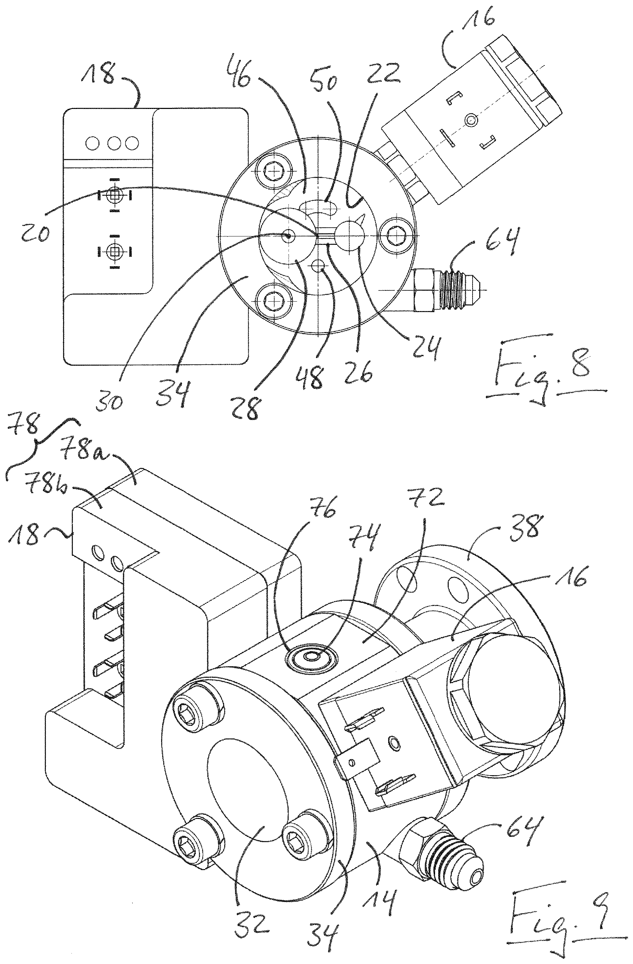

Eine dritte Ausführungsform des Ölspiegelregulators ist in Fig. 8 gezeigt. Diese dritte Ausführungsform unterscheidet sich von der in Fig. 6A und 6B gezeigten zweiten Ausführungsform lediglich in der Gestalt der zur Entgasung der Kammer 22 vorgesehenen oberen Öffnung 50 in der Wand 46 des Grundkörpers 14, während die für den Ölaustausch zwischen dem Ringsspalt 44 und der Kammer 22 vorgesehene untere Öffnung 48 nämlich wie zuvor durch eine kreisförmige Bohrung gebildet ist, weist die zur Entgasung dienende obere Öffnung 50 eine größere Querschnittsfläche als die untere Öffnung 48 auf. Konkret ist die obere Öffnung 50 hier in Form eines um die Symmetrieachse 20 herumgekrümmten Langlochs ausgebildet, was der oberen Öffnung 50 eine nierenförmige Gestalt verleiht. Die im Vergleich zur unteren Öffnung 48 größere Querschnittsfläche der oberen Öffnung 50 trägt zu einer effizienteren Entgasung der Kammer und reduzierten Gefahr von Schaumbildung in der Kammer 22 bei.

In Fig. 9 ist eine vierte Ausführungsform eines Ölspiegelregulators dargestellt, welche sich von der in Fig. 6A und 6B gezeigten zweiten Ausführungsform lediglich darin unterscheidet, dass der Grundkörper 14 auch an seiner Oberseite eine, insbesondere durch Flachfräsen erzeugte, ebene Fläche 72 aufweist, welche zumindest annähernd rechtwinklig zu der vertikalen ebenen Fläche 52 orientiert ist, die zur Befestigung des Elektronikmoduls 18 dient. Im Bereich der oberen ebenen Fläche 72 ist eine Wasserwaage 74, hier in Form einer Rundlibelle, in den Grundkörper 14, eingelassen. Die Wasserwaage 74 dient als Montagehilfe und erleichtert insbesondere eine korrekte Ausrichtung des Ölspiegelregulators, welche letztlich für eine zuverlässige Ölspiegelregulator unerlässlich ist.

Damit die Wasserwaage 74 zumindest annähernd bündig mit der ebenen Fläche 72 abschließt, ist eine entsprechende Vertiefung 76 in dem Grundkörper 14 vorgesehen. Im vorliegenden Ausführungsbeispiel ist die Wasserwaage 74 in die Vertiefung 76 eingeschraubt. Es ist aber auch denkbar, die Wasserwaage 74 in die Vertiefung 76 einzupressen oder einzukleben. Selbstverständlich kann die Wasserwaage 74 auch direkt auf der ebenen Fläche 72 angebracht werden, beispielsweise auf diese aufgeklebt werden. Des Weiteren ist eine lösbare Verbindung von Wasserwaage 74 und Grundkörper 14 vorstellbar, was es erlauben würde, die Wasserwaage 74 nach dem Einbau des Ölspiegelregulators abzunehmen und für die Justierung eines anderen Ölspiegelregulators zu verwenden.

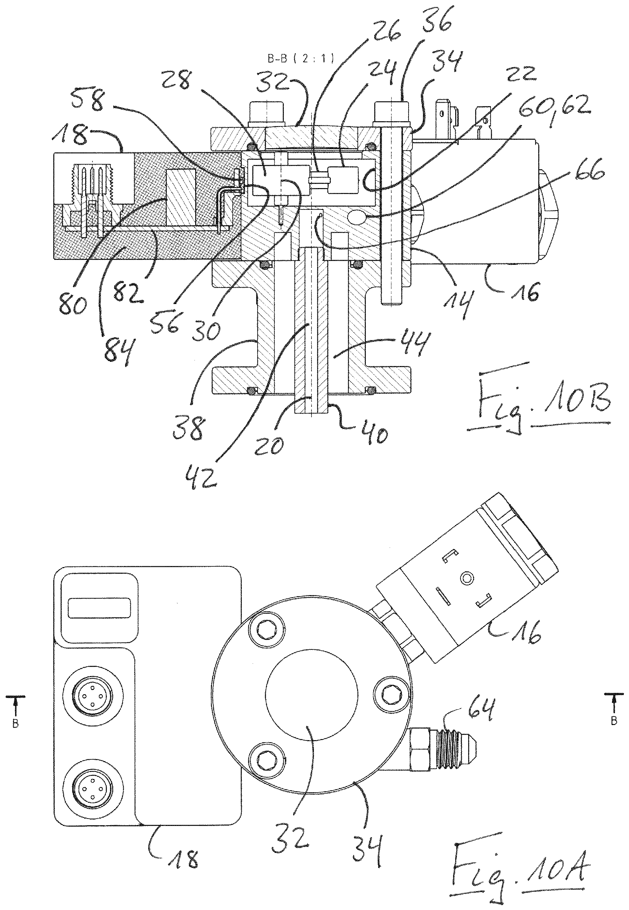

In Fig. 10A und 10B ist eine fünfte Ausführungsform eines Ölspiegelregulators dargestellt, welche sich von der in Fig. 6A und 6B gezeigten zweiten Ausführungsform lediglich in der Ausbildung des Elektronikmoduls 18 unterscheidet. Während das Elektronikmodul 18 der zweiten Ausführungsform nämlich ein aus zwei Gehäusehälften 78a, 78b zusammengesetztes Gehäuse 78 aufweist, in welchem die vorhandenen Elektronikbauteile untergebracht sind, handelt es sich bei dem Elektronikmodul 18 der fünften Ausführungsform um eine vergossene Elektronik, d.h. eine Leiterplatte 80 und darauf sitzende Elektronikbauteile 82 sind mit einem Harz umgossen, wodurch auf ein Gehäuse verzichtet werden kann.

In Fig. 10B ist auch der Hallsensor 58 zu erkennen, der an der dem Grundkörper 14 zugewandten Außenseite des Elektronikmoduls 18 sitzt und in der Tasche 56 des Grundkörpers 14 aufgenommen ist.

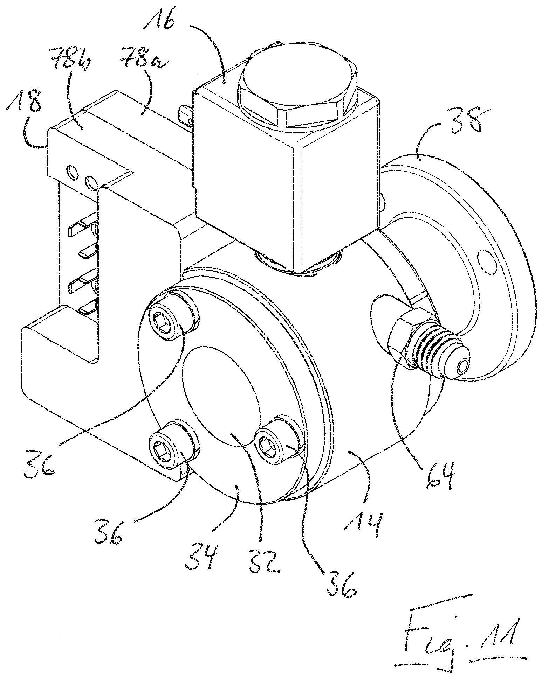

In Fig. 11 ist eine sechste Ausführungsform eines Ölspiegelregulators dargestellt, welche sich von der in Fig. 6A und 6B gezeigten zweiten Ausführungsform darin unterscheidet, dass das Magnetventil 16 nicht schräg, d.h. unter einem Winkel von 45°, an dem Grundkörper 14 angebracht ist, sondern bezogen auf die Einbaulage des Ölspiegelregulators vertikal ausgerichtet ist, gewissermaßen also oben auf dem Grundkörper 14 sitzt und einen rechten Winkel mit dem Öleinlasskanal 60 bildet. Im weiteren Unterschied zur zweiten Ausführungsform verläuft der Öleinlasskanal 60 der in Fig. 11 dargestellten sechsten Ausführungsform nicht unterhalb sondern oberhalb der Symmetrieachse 20, wie sich aus der Lage des Anschlussstutzens 64 unschwer erkennen lässt. Der sich von dem Magnetventil 16 zu dem Öleinlasskanal 60 erstreckende erste Kanalabschnitt 68 fällt bei dieser sechsten Ausführungsform also deutlich kürzer aus als bei der zweiten Ausführungsform, wohingegen sich der zweite Kanalabschnitt 70 wiederum radial von dem Magnetventil 16 zu dem Ölauslasskanal 42 hin erstreckt.

Abschließend sei darauf hingewiesen, dass die Ausbildung des Elektronikmoduls 18 grundsätzlich unabhängig von der Lage des Magnetventils 16 und auch unabhängig davon ist, ob der Grundkörper 14 und der Flanschabschnitt 38 einstückig ausgebildet oder separate Bauteile sind. Insbesondere können auch die erste bis vierte und sechs Ausführungsform mit einem vergossenen Elektronikmodul 18, wie es in Fig. 10A und 10B gezeigt ist, ausgerüstet sein. Entsprechend kann mit Ausnahme der sechsten Ausführungsform, bei welcher das Magnetventil 16 oben auf dem Grundkörper 14 sitzt, jede der ersten bis dritten und fünften Ausführungsformen mit einer Wasserwaage 74 versehen sein. Schließlich kann ähnlich wie bei der vierten Ausführungsform jede der ersten bis dritten, fünften und sechsten Ausführungsformen eine obere Öffnung 50 zur Entgasung der Kammer 22 aufweisen, deren Querschnittsfläche größer ist als die der unteren Öffnung 48.

### Bezugszeichenliste

- 14: Grundkörper
- 16: Magnetventil
- 18: Elektronikmodul
- 20: Symmetrieachse
- 22: Kammer
- 24: Schwimmer
- 26: Arm
- 28: Drehkörper
- 30: Drehachse
- 32: Schauglas
- 34: Ringscheibe
- 36: Schraube
- 38: Flanschabschnitt
- 40: Rohrabschnitt
- 42: Ölauslasskanal
- 44: Ringspalt
- 46: Wand
- 48: untere Öffnung
- 50: obere Öffnung
- 52: ebene Fläche
- 54: Befestigungspunkt
- 56: Tasche
- 58: Hallsensor
- 60: Öleinlasskanal
- 62: Bohrung
- 64: Anschlussstutzen
- 66: Ventilaufnahme
- 68: erster Kanalabschnitt
- 70: zweiter Kanalabschnitt
- 72: ebene Fläche
- 74: Wasserwaage
- 76: Vertiefung
- 78: Gehäuse
- 78a: Gehäusehälfte
- 78b: Gehäusehälfte
- 80: elektronisches Bauteil
- 82: Leiterplatte
- 84: Harz

## Patentansprüche

1. Ölspiegelregulator mit
einem Grundkörper (14),
einer in dem Grundkörper (14) ausgebildeten, durch ein Schauglas (32) begrenzten und zur Aufnahme von Öl vorgesehenen Kammer (22), in welcher ein Schwimmer (24) angeordnet ist,
einem Hallsensor (58) zur Erfassung der Lage des Schwimmers (24) innerhalb der Kammer (22),
einem in dem Grundkörper (14) ausgebildeten Öleinlasskanal (60),
einem in dem Grundkörper (14) ausgebildeten Ölauslasskanal (42),
und
einem an dem Grundkörper (14) angebrachten und zwischen den Öleinlasskanal (60) und den Ölauslasskanal (42) geschalteten Magnetventil (16) zum Steuern eines Ölflusses von dem Öleinlasskanal (60) zu dem Ölauslasskanal (42),
**dadurch gekennzeichnet,**
**dass** der Ölauslasskanal (42) mit der Kammer (22) kommuniziert und dass dem Grundkörper (14) eine bezüglich einer Symmetrieachse (20) rotationssymmetrische Grundform zugrunde liegt.

2. Ölspiegelregulator nach Anspruch 1,
**dadurch gekennzeichnet,**
**dass** dem Grundkörper (14) eine kreiszylindrische Grundform zugrunde liegt.

3. Ölspiegelregulator (42) nach Anspruch 1 oder 2,
**dadurch gekennzeichnet,**
**dass** sich der Ölauslasskanal (42) parallel zur Symmetrieachse (20) des Grundkörpers (14) und insbesondere koaxial zu dieser erstreckt.

4. Ölspiegelregulator nach zumindest einem der vorherigen Ansprüche, **dadurch gekennzeichnet,**
**dass** das Magnetventil (16) radial zur Symmetrieachse (20) des Grundkörpers (14) ausgerichtet ist.

5. Ölspiegelregulator nach zumindest einem der vorherigen Ansprüche, **dadurch gekennzeichnet,**
**dass** der Öleinlasskanal (60) und das Magnetventil (16) durch einen sich innerhalb des Grundkörpers (14) erstreckenden geraden ersten Kanalabschnitt (68) miteinander verbunden sind.

6. Ölspiegelregulator nach zumindest einem der vorherigen Ansprüche, **dadurch gekennzeichnet,**
**dass** das Magnetventil (16) und der Ölauslasskanal (42) durch einen geraden zweiten Kanalabschnitt (70) miteinander verbunden sind, welcher sich radial zur Symmetrieachse (20) des Grundkörpers (14) in diesem erstreckt.

7. Ölspiegelregulator nach Anspruch 5 und 6,
**dadurch gekennzeichnet,**
**dass** der erste und zweite Kanalabschnitt (68, 70) eine Ebene aufspannen, die zumindest annähernd rechtwinklig zur Symmetrieachse (20) des Grundkörpers (14) ausgerichtet ist.

8. Ölspiegelregulator nach zumindest einem der vorherigen Ansprüche, **dadurch gekennzeichnet,**
**dass** der Grundkörper (14) eine Tasche (56) für den Hallsensor (58) ausbildet.

9. Ölspiegelregulator nach zumindest einem der vorherigen Ansprüche, **dadurch gekennzeichnet,**
**dass** ein, insbesondere vergossenes, Elektronikmodul (18) an dem Grundkörper (14) angebracht ist.

10. Ölspiegelregulator nach Anspruch 9,
**dadurch gekennzeichnet,**
**dass** das Elektronikmodul (18) im Bereich einer Tasche (56) für den Hallsensor (58) angeordnet ist.

11. Ölspiegelregulator nach einem der Ansprüche 8 bis 10,
**dadurch gekennzeichnet,**
**dass** der Grundkörper (14) an seiner Außenseite eine sich parallel zur Symmetrieachse (20) erstreckende ebene Fläche (52) ausbildet, in welcher die Tasche (56) für den Hallsensor (58) und/oder das Elektronikmodul (18) angeordnet sind/ist.

12. Ölspiegelregulator nach zumindest einem der vorherigen Ansprüche, **dadurch gekennzeichnet,**
**dass** eine Wasserwaage (74), beispielsweise mit Rundlibelle, an dem Grundkörper (14) angebracht ist, insbesondere an einer Oberseite des Grundkörpers (14).

13. Ölspiegelregulator nach zumindest einem der vorherigen Ansprüche, **dadurch gekennzeichnet,**
**dass** der Grundkörper (14) einen Flansch und/oder Adapter (38) zur Anbringung des Ölspiegelregulators an einem Verdichter ausbildet, oder
**dass** ein Flansch und/oder Adapter (38) zur Anbringung des Ölspiegelregulators an einem Verdichter an dem Grundkörper (14) angebracht, z.B. angeschraubt, ist.

14. Ölspiegelregulator nach zumindest einem der vorherigen Ansprüche, **dadurch gekennzeichnet,**
**dass** der Grundkörper (14) einen Anbindungskanal (44) zum Anbinden der Kammer (22) an einen Ölsumpf eines Verdichters ausbildet, insbesondere wobei der Anbindungskanal (44) sich entlang der Symmetrieachse (20) erstreckt und/oder den Ölauslasskanal (42) ringförmig umgibt.

15. Ölspiegelregulator nach Anspruch 14,
**dadurch gekennzeichnet,**
**dass** der Anbindungskanal (44) über eine untere Öffnung (48) und eine obere Öffnung (50) mit der Kammer (22) kommuniziert, insbesondere wobei die obere Öffnung (50) eine größere Querschnittsfläche aufweist als die untere Öffnung (48).

## Claims

1. An oil level regulator comprising
a base body (14);
a chamber (22) provided for receiving oil which is formed in the base body (14), which is bounded by a sight glass (32) and in which a float (24) is arranged;
a Hall sensor (58) for detecting the position of the float (24) within the chamber (22);
an oil inlet passage (60) formed in the base body (14);
an oil outlet passage (42) formed in the base body (14); and
a solenoid valve (16) for controlling an oil flow from the oil inlet passage (60) to the oil outlet passage (42), said solenoid valve (16) being attached to the base body (14) and being connected between the oil inlet passage (60) and the oil outlet passage (42),
**characterized in that**
the oil outlet passage (42) communicates with the chamber (22), and **in that** the base body (14) is based on a basic shape which is rotationally symmetrical with respect to an axis of symmetry (20).

2. An oil level regulator in accordance with claim 1,
**characterized in that**
the base body (14) is based on a circular-cylindrical basic shape.

3. An oil level regulator (42) in accordance with claim 1 or claim 2, **characterized in that**
the oil outlet passage (42) extends in parallel with the axis of symmetry (20) of the base body (14) and in particular coaxially thereto.

4. An oil level regulator in accordance with at least one of the preceding claims,
**characterized in that**
the solenoid valve (16) is oriented radially with respect to the axis of symmetry (20) of the base body (14).

5. An oil level regulator in accordance with at least one of the preceding claims,
**characterized in that**
the oil inlet passage (60) and the solenoid valve (16) are connected to one another by a straight first passage section (68) extending within the base body (14).

6. An oil level regulator in accordance with at least one of the preceding claims,
**characterized in that**
the solenoid valve (16) and the oil outlet passage (42) are connected to one another by a straight second passage section (70) which extends radially with respect to the axis of symmetry (20) of the base body (14) in said base body (14).

7. An oil level regulator in accordance with claim 5 and claim 6, **characterized in that**
the first and second passage sections (68, 70) span a plane which is oriented at least approximately at a right angle to the axis of symmetry (20) of the base body (14).

8. An oil level regulator in accordance with at least one of the preceding claims,
**characterized in that**
the base body (14) forms a pocket (56) for the Hall sensor (58).

9. An oil level regulator in accordance with at least one of the preceding claims,
**characterized in that**
an electronics module (18), in particular an encapsulated electronics module (18), is attached to the base body (14).

10. An oil level regulator in accordance with claim 9,
**characterized in that**
the electronics module (18) is arranged in the region of a pocket (56) for the Hall sensor (58).

11. An oil level regulator in accordance with any one of the claims 8 to 10, **characterized in that**
the base body (14) forms, at its outer side, a planar surface (52) which extends in parallel with the axis of symmetry (20) and in which the pocket (56) for the Hall sensor (58) and/or the electronics module (18) is/are arranged.

12. An oil level regulator in accordance with at least one of the preceding claims,
**characterized in that**
a spirit level (74), for example having a circular level, is attached to the base body (14), in particular to an upper side of the base body (14).

13. An oil level regulator in accordance with at least one of the preceding claims,
**characterized in that**
the base body (14) forms a flange and/or an adapter (38) for attaching the oil level regulator to a compressor, or
**in that** a flange and/or an adapter (38) for attaching the oil level regulator to a compressor is/are attached, e.g. screwed, to the base body (14).

14. An oil level regulator in accordance with at least one of the preceding claims,
**characterized in that**
the base body (14) forms a connection passage (44) for connecting the chamber (22) to an oil sump of a compressor, in particular with the connection passage (44) extending along the axis of symmetry (20) and/or surrounding the oil outlet passage (42) in a ring shape.

15. An oil level regulator in accordance with claim 14,
**characterized in that**
the connection passage (44) communicates with the chamber (22) via a lower opening (48) and an upper opening (50), in particular with the upper opening (50) having a larger cross-sectional surface than the lower opening (48).

## Revendications

1. Régulateur de niveau d'huile, comprenant
un corps de base (14),
une chambre (22) formée dans le corps de base (14), délimitée par un hublot (32) et prévue pour recevoir de l'huile, dans laquelle est disposé un flotteur (24),
un capteur à effet Hall (58) pour détecter la position du flotteur (24) à l'intérieur de la chambre (22),
un canal d'entrée d'huile (60) formé dans le corps de base (14),
un canal de sortie d'huile (42) formé dans le corps de base (14),
et
une électrovanne (16) montée sur le corps de base (14) et connectée entre le canal d'entrée d'huile (60) et le canal de sortie d'huile (42) pour contrôler un flux d'huile du canal d'entrée d'huile (60) vers le canal de sortie d'huile (42),
**caractérisé en ce que**
le corps de base (14) communique avec la chambre (22), et
le corps de base (14) est basé sur une forme de base à symétrie de révolution par rapport à un axe de symétrie (20).

2. Régulateur de niveau d'huile selon la revendication 1,
**caractérisé en ce que**
le corps de base (14) est basé sur une forme de base cylindrique circulaire.

3. Régulateur de niveau d'huile (42) selon la revendication 1 ou 2, **caractérisé en ce que**
le canal de sortie d'huile (42) s'étend parallèlement à l'axe de symétrie (20) du corps de base (14) et en particulier coaxialement à celui-ci.

4. Régulateur de niveau d'huile selon l'une au moins des revendications précédentes,
**caractérisé en ce que**
l'électrovanne (16) est orientée radialement par rapport à l'axe de symétrie (20) du corps de base (14).

5. Régulateur de niveau d'huile selon l'une au moins des revendications précédentes,
**caractérisé en ce que**
le canal d'entrée d'huile (60) et l'électrovanne (16) sont reliés entre eux par un premier tronçon de canal (68) rectiligne s'étendant à l'intérieur du corps de base (14).

6. Régulateur de niveau d'huile selon l'une au moins des revendications précédentes,
**caractérisé en ce que**
l'électrovanne (16) et le canal de sortie d'huile (42) sont reliés entre eux par un deuxième tronçon de canal (70) rectiligne qui s'étend dans le corps de base (14) radialement par rapport à l'axe de symétrie (20) de celui-ci.

7. Régulateur de niveau d'huile selon les revendications 5 et 6,
**caractérisé en ce que**
les premier et deuxième tronçons de canal (68, 70) définissent un plan qui est orienté au moins approximativement à angle droit par rapport à l'axe de symétrie (20) du corps de base (14).

8. Régulateur de niveau d'huile selon l'une au moins des revendications précédentes,
**caractérisé en ce que**
le corps de base (14) forme une poche (56) pour le capteur à effet Hall (58).

9. Régulateur de niveau d'huile selon l'une au moins des revendications précédentes,
**caractérisé en ce que**
un module électronique (18), en particulier scellé, est monté sur le corps de base (14).

10. Régulateur de niveau d'huile selon la revendication 9,
**caractérisé en ce que**
le module électronique (18) est disposé au niveau d'une poche (56) pour le capteur à effet Hall (58).

11. Régulateur de niveau d'huile selon l'une des revendications 8 à 10, **caractérisé en ce que**
le corps de base (14) forme sur sa face extérieure une surface plane (52) s'étendant parallèlement à l'axe de symétrie (20), dans laquelle est/sont disposé(e)(s) la poche (56) pour le capteur à effet Hall (58) et/ou le module électronique (18).

12. Régulateur de niveau d'huile selon l'une au moins des revendications précédentes,
**caractérisé en ce que**
un niveau à bulle (74), par exemple avec une nivelle sphérique, est monté sur le corps de base (14), en particulier sur une face supérieure du corps de base (14).

13. Régulateur de niveau d'huile selon l'une au moins des revendications précédentes,
**caractérisé en ce que**
le corps de base (14) forme une bride et/ou un adaptateur (38) pour le montage du régulateur de niveau d'huile sur un compresseur, ou
**en ce qu'**une bride et/ou un adaptateur (38) pour le montage du régulateur de niveau d'huile sur un compresseur est monté(e), par exemple vissé(e), sur le corps de base (14).

14. Régulateur de niveau d'huile selon l'une au moins des revendications précédentes,
**caractérisé en ce que**
le corps de base (14) forme un canal de raccordement (44) pour raccorder la chambre (22) à un carter à huile d'un compresseur, en particulier le canal de raccordement (44) s'étendant le long de l'axe de symétrie (20) et/ou entourant en forme annulaire le canal de sortie d'huile (42).

15. Régulateur de niveau d'huile selon la revendication 14,
**caractérisé en ce que**
le canal de raccordement (44) communique avec la chambre (22) par l'intermédiaire d'une ouverture inférieure (48) et d'une ouverture supérieure (50), en particulier l'ouverture supérieure (50) présentant une surface de section transversale plus grande que celle de l'ouverture inférieure (48).
